# DEMANDE DE BREVET EUROPEEN

(11) **EP 0 533 513 A1**
(43) Date de publication de la demande: **24.03.1993**
(21) Numéro de dépôt: 92402258.5
(22) Date de dépôt: 07.08.1992
(51) Int. Cl.: F16B 5/02, B60Q 1/04

(54) **Dispositif réglable de fixation par une liaison filetée**

(30) Priorité: 20.09.1991 FR 9111651
(71) Demandeur: AUTOMOBILES PEUGEOT, F-75116 Paris (FR); AUTOMOBILES CITROEN, F-92200 Neuilly sur Seine (FR)
(72) Inventeur: Guigon, Michel, F-90500 Beaucourt (FR)
(74) Mandataire: Kohn, Philippe

(57) **Abrégé**

L'invention propose un dispositif (24) de fixation par une liaison filetée d'une pièce (16) sur un support (18, 26) du type comportant une vis de serrage (28) qui traverse la pièce (16) et dont le corps fileté (32, 34) est vissé dans un taraudage de serrage (44) lié au support (18) et comportant des moyens de réglage de la position axiale de la pièce (16) par rapport au support (18), caractérisé en ce que le taraudage de serrage (44) est réalisé dans un manchon de réglage (36) dont la surface cylindrique externe comporte un filetage de réglage (46) qui est vissé dans un taraudage de réglage (48) formé dans une portion de fixation (26) du support et dont l'extrémité axiale (39) en regard de la pièce (16, 17) comporte une surface axiale (39) d'appui sur laquelle prend appui la pièce (16, 17).

Application notamment au montage d'un bloc optique de véhicule automobile.

## Description

La présente invention concerne un dispositif de fixation par une liaison filetée d'une pièce sur un support.

Elle concerne plus particulièrement un dispositif de fixation du type comportant une vis de serrage qui traverse la pièce et dont le corps fileté est vissé dans un taraudage de serrage lié au support et comportant des moyens de réglage de la position axiale de la pièce par rapport au support.

L'invention trouve plus particulièrement à s'appliquer dans tous les cas où l'on désire réaliser un positionnement axial précis de la pièce par rapport au support et plus particulièrement à un plan de référence perpendiculaire à l'axe de fixation.

Un tel dispositif peut notamment être utilisé pour réaliser le montage d'un projecteur sur la partie avant de la caisse d'un véhicule automobile afin de le positionner précisément par rapport à la face avant du véhicule.

La face avant est une pièce de forme complexe qui est située immédiatement derrière la calandre de la carrosserie et qui supporte différents équipements du véhicule tels que par exemple les ventilateurs de refroidissement et les différents moyens d'éclairage.

Les projecteurs y sont généralement fixés par des pattes transversales de fixation.

Afin d'assurer une continuité la plus précise possible entre les différents éléments de la carrosserie et la face avant des projecteurs, il est nécessaire que ceux-ci soient parfaitement positionnés axialement par rapport aux autres pièces de la carrosserie telles que notamment le pare-chocs et le capot.

Dans le cas du montage d'un projecteur automobile, ce positionnement précis est en outre particulièrement important car il correspond également à un réglage optimal du faisceau d'éclairage.

Les pattes de fixation de chacun des projecteurs sont des pièces réalisées par moulage en matière plastique avec l'ensemble du boîtier du projecteur et les cotes dimensionnelles de ces pattes présentent d'importantes dispersions résultant de leur fabrication en grande série.

L'invention a pour but de proposer un dispositif de fixation qui permet de réaliser de manière économique et automatisée un positionnement précis, notamment d'un projecteur de véhicule automobile, par rapport à une surface de référence prédéterminée.

Dans ce but l'invention propose un dispositif de fixation du type mentionné précédemment, caractérisé en ce que le taraudage de serrage est réalisé dans un manchon de réglage dont la surface cylindrique externe comporte un filetage qui est vissé dans un taraudage de réglage formé dans une portion de fixation du support et dont l'extrémité axiale en regard de la pièce comporte une surface axiale d'appui sur laquelle prend appui la pièce.

Selon d'autres caractéristiques de l'invention :
- les filetages des deux taraudages ont des sens inverses l'un de l'autre ;
- l'autre extrémité axiale du manchon de réglage comporte des moyens de préhension, par exemple au moyen d'un outil automatisé de vissage, pour en permettre l'entraînement en rotation ;
- la portion de fixation du support est une douille immobilisée axialement et en rotation par rapport au support et dans l'alésage interne de laquelle est formé le taraudage de réglage ;
- l'autre extrémité axiale du manchon de réglage est filetée extérieurement pour recevoir un écrou de blocage qui peut être serré axialement en appui contre une surface d'appui de la face en vis-à-vis de la portion de fixation du support ; et
- la surface d'appui est constituée par la face radiale de l'extrémité axiale de la douille.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe transversale illustrant de manière schématique l'agencement d'un projecteur de véhicule automobile sur la face avant de la caisse de ce dernier ; et
- la figure 2 est une vue en coupe axiale d'un dispositif de fixation du projecteur réalisé conformément aux enseignements de l'invention.

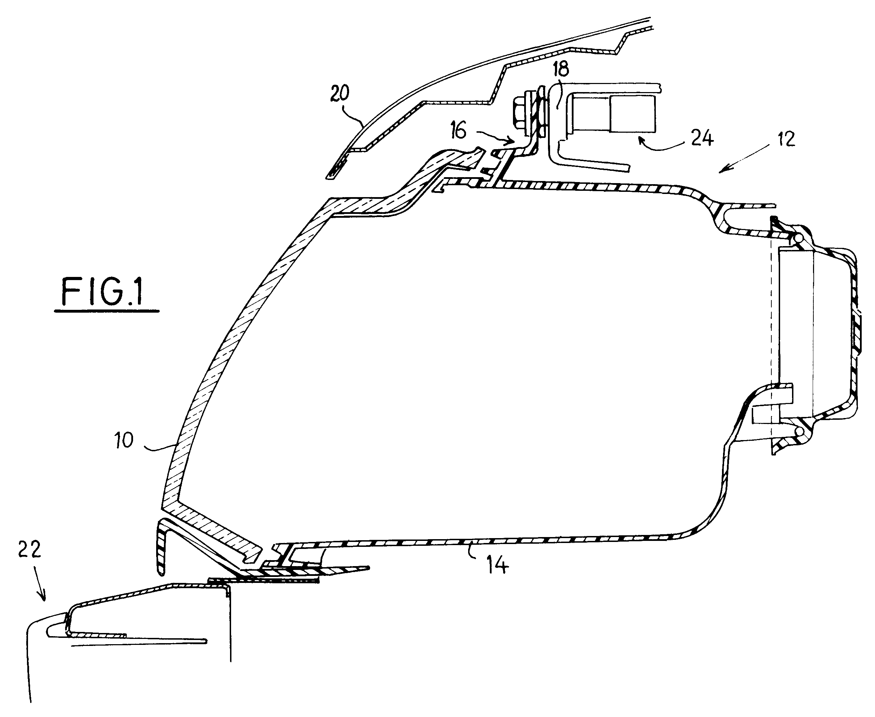

On reconnaît sur la figure 1 la face avant 10 d'un projecteur de véhicule automobile 12 dont le boîtier en matière plastique 14 comporte plusieurs pattes transversales de fixation 16 réalisées venues de moulage avec le boîtier 12 afin d'en permettre le montage sur la face avant 18 de la caisse du véhicule automobile.

Compte tenu des dispersions dimensionnelles et géométriques de réalisation par moulage des pattes de fixation 16, il est nécessaire de pouvoir positionner axialement et de manière précise le projecteur 12 de manière que la face avant 10 présente la meilleure continuité possible par rapport aux éléments de carrosserie du véhicule tels que le capot 20 et le pare-chocs 22.

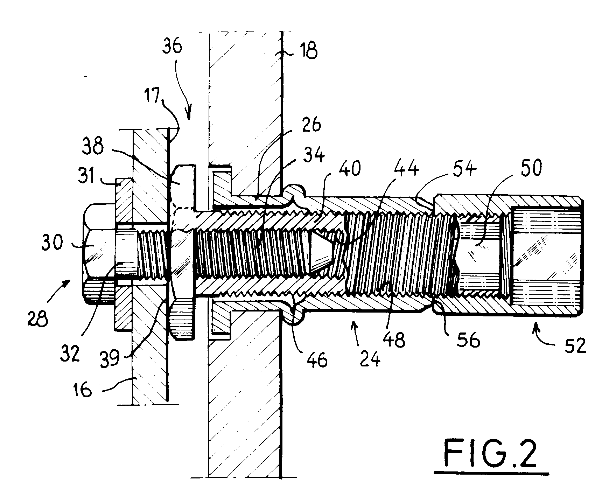

A cet effet, chacune des pattes de fixation 16 est fixée sur la face avant 18 à l'aide d'un dispositif de fixation 24 réalisé conformément aux enseignements de l'invention et pour la description duquel on se reportera à la figure 2.

On reconnaît en coupe axiale sur la figure 2, une portion 18 de la face avant de la caisse du véhicule dans laquelle est fixée, de manière connue en soi, une douille de fixation 26 qui est immobilisée axialement et en rotation par rapport à la face avant 18.

La fixation et le serrage de la patte de fixation 16 est assurée au moyen d'une liaison filetée qui comporte une vis de serrage 28 comportant une tête 30 et un corps 32 dont la plus grande partie comporte un filetage mâle de serrage 34.

Le corps fileté 32, 34 de la vis de serrage 28 est reçu dans l'alésage interne d'un manchon de réglage 36.

Le manchon de réglage 36 comporte une tête à six pans 38 et un corps cylindrique creux 40 dont l'alésage interne comporte un taraudage de serrage 44 et dont la paroi cylindrique externe comporte un filetage mâle de réglage 46.

Le manchon de réglage 36 est monté vissé à l'intérieur d'une portion taraudée 48 de la douille de fixation 26.

Conformément à un aspect de l'invention, et comme cela sera expliqué plus avant, les filetages des taraudages de serrage 44 et de réglage 48 ont des sens inverses l'un de l'autre.

L'extrémité axiale du corps 40 du manchon de réglage 36 qui est éloignée de la patte de fixation 16, et donc située à droite en considérant la figure 2, comporte un six pans creux 50 qui permet d'entraîner en rotation le manchon de réglage 36.

Le dispositif de fixation 24 comporte enfin un contre-écrou de blocage 52 qui est monté vissé sur la portion d'extrémité correspondante du corps 40 du manchon de réglage 36 et dont une face axiale d'extrémité 54 prend appui, en position de blocage, contre la face radiale d'extrémité axiale en vis-à-vis 56 de la douille de fixation 26.

Le montage, par exemple automatisé à l'aide d'un robot de vissage, d'un projecteur à l'aide des dispositifs de fixation 24 s'effectue de la manière suivante.

Le manchon de réglage 36 est vissé à fond mais sans blocage dans la douille de fixation 26 de la face avant 18.

On procède ensuite à la mise en place du contre-écrou de blocage 52.

Le projecteur 12 est mis en position de manière que sa face avant 10 soit alignée par rapport aux pièces environnantes de la carrosserie et la tête 38 du manchon de réglage 36 est alors amenée en appui axial de manière que sa face axiale 39 vienne en appui contre la face en vis-à-vis 17 de la patte de fixation 16.

Cette mise en appui est réalisée en entraînant en rotation, dans le sens correspondant, le manchon de réglage 36 à l'aide du six pans creux 50.

On réalise ensuite l'opération de serrage en position de chaque patte de fixation 16 en serrant les vis 28 à l'aide des têtes 30 avec interposition de rondelles de serrage 31.

Chacun des dispositifs de fixation 24 est finalement bloqué à l'aide du contre-écrou 52.

Du fait de l'inversion du sens des filetages des taraudages de serrage et de réglage, on peut réaliser le serrage par vissage de la vis de serrage 28 sans modifier le réglage de la position axiale du manchon de réglage 36 par rapport à la douille de fixation 26.

Le dispositif de fixation 24 qui vient d'être décrit peut être utilisé à chaque fois que l'on veut fixer un élément par rapport à un support dans une position axiale précise par rapport à un plan de référence indépendant du support.

## Revendications

1. Dispositif (24) de fixation par une liaison filetée d'une pièce (16) sur un support (18, 26) du type comportant une vis de serrage (28) qui traverse la pièce (16) et dont le corps fileté (32, 34) est vissé dans un taraudage de serrage (44) lié au support (18) et comportant des moyens de réglage de la position axiale de la pièce (16) par rapport au support (18), caractérisé en ce que le taraudage de serrage (44) est réalisé dans un manchon de réglage (36) dont la surface cylindrique externe comporte un filetage de réglage (46) qui est vissé dans un taraudage de réglage (48) formé dans une portion de fixation (26) du support et dont l'extrémité axiale (39) en regard de la pièce (16, 17) comporte une surface axiale (39) d'appui sur laquelle prend appui la pièce (16, 17).

2. Dispositif selon la revendication 1, caractérisé en ce que les filetages des taraudages de serrage (44) et de réglage (48) ont des sens inverses l'un de l'autre.

3. Dispositif selon l'une des revendications 1 ou 2, caractérisé en ce que l'autre extrémité axiale du manchon (36) comporte des moyens de préhension (50), par exemple au moyen d'un outil automatisé de vissage, pour en permettre l'entraînement en rotation.

4. Dispositif selon l'une quelconque des revendications précédentes, caractérisé en ce que la portion de fixation (26) du support (18) est une douille (26) immobilisée axialement et en rotation par rapport au support (18) et dans l'alésage interne de laquelle est formé le taraudage de réglage (48).

5. Dispositif selon l'une quelconque des revendications précédentes, caractérisé en ce que l'autre extrémité axiale du manchon de réglage est filetée extérieurement pour recevoir un écrou de blocage (52) qui peut être serré axialement en appui contre une surface d'appui (56) de la face en vis-à-vis de la portion de fixation (26) du support (18).

6. Dispositif selon la revendication 5 prise en combinaison avec la revendication 4, caractérisé en ce que ladite surface d'appui (56) est constituée par la face radiale de l'extrémité axiale (56) de la douille de fixation (26).
